# EUROPEAN PATENT SPECIFICATION

(11) **EP 2 205 672 B1**
(45) Date of publication and mention of the grant of the patent: **30.04.2014**
(21) Application number: 07870504.3
(22) Date of filing: 24.09.2007
(51) Int. Cl.: C08F 212/36, C08F 212/12, C08F 220/58, C08F 2/18, B01J 20/32, B01J 20/26

(54) **NON-IONIC POROUS, SMALL SOLID RESIN WITH CHEMICALLY BONDED CROWN ETHER**
NICHTIONISCHES PORÖSES, KLEINES FESTES HARZ MIT CHEMISCH GEBUNDENEM KRONENETHER
RÉSINE SOUS FORME DE PETITS SOLIDES, POREUSE, NON-IONIQUE, AVEC UN ÉTHER COURONNE CHIMIQUEMENT LIÉ

(43) Date of publication of application: 14.07.2010
(73) Proprietor: Secretary, Department of Atomic Energy, Mumbai 400 001 (IN)
(72) Inventor: BABU, Chintala, Chervu, Anand,, Kalpakkam 603102 (IN); KESAVAMOORTHY, Rasu, Kalpakkam 603102 (IN); DHEKANE, Gunesh, Pune 411009 (IN); VAIDYANATHAN, Ganesan, Kalpakkam 603012 (IN); BALDEVRAJ, Dr., Kalpakkam 603102 (IN)
(74) Representative: Srinivasan, Ravi Chandran
(86) International application number: PCT/IN2007/000461
(87) International publication number: WO 2009/040826

(56) References cited:
- WO-A1-93/02112
- WO-A2-03/025538
- US-A- 5 865 994
- US-A1- 2003 075 508
- US-A1- 2003 127 395
- C. A. NASH ET AL. CESIUM ION EXCHANGE PROGRAM WM 105 CONFERENCE 27 February 2005 - 03 March 2005, XP008135597
- HASSAN N.M. ET AL: 'SuperLig ion exchange resin swelling and buoyancy study' 03 August 2000, DE-AC09-96SR18500, XP008133708
- H. MATSUMIYA ET AL.: 'Sulfinylcalix[4]arene-impregnated Amberlite XAD-7 resin for the separation of niobium(V) from tantalum(V)' JOURNAL OF CHROMATOGRAPHY A vol. 1090, no. 1-2, 07 October 2005, pages 197 - 200, XP005045733
- [Online] Retrieved from the Internet: <URL:www.sigmaaldrich.com/chemistry/aldrich -chemistry/tech- bulletins/al-142/amberlite-o Catalog>
- H. GIBSON ET AL.: 'Synthesis of poly[(styrene)-rotaxa-(crown ether)]s via free radical polymerization' POLYMER vol. 40, 1999, pages 1823 - 1832, XP004155483
- D BILBA ET AL.: 'Chelating sorbents in inorganic chemical analysis' CROATICA CHEM. ACT. vol. 71, no. 1, 1998, pages 155 - 178, XP008133707
- Bruce A. Moyer, Raj P. Singh: "Fundamentals and Applications of Anion Separations", 2004, Kluwer Academic, New York ISBN: 0-306-47911-7 * pages 1,2,111,114 *

## Description

### FIELD OF THE INVENTION:

This invention relates to a process for the preparation of a non-ionic porous, solid resin with chemically bonded crown ether.

The non-ionic, porous, solid resin is for use in pollution control, analytical chemistry and in medical diagnosis.

### BACKGROUND OF THE INVENTION :

It is known in the art to extract ions from aqueous solutions by ion-exchange resins. Cations are extracted using cationic resins where H⁺ in the resins is replaced with the cation in the solution. Anions are extracted with anionic resins where OH⁻ in the resins is replaced with anion in the solution. In the process, the resins do not posses any selectivity towards the ions. Therefore, they cannot be used for selective ion extraction.

Crown ethers are extensively used in separation processes as it has specific ion affinity and selectivity towards cations. Any specific crown ether will selectively extract a particular cation. The crown ether is adsorbed to the resin surface or physically trapped inside the resin without any chemical exchange.

These crown ether impregnated resins extract the specific ion, but the crown ether with and without the trapped ions could leach off the resin and pose problems. Crown ethers are neuro-toxic and the specific ions could be an environmental hazard or health hazard. It is known from the art that crown ether is added to the solution where it traps specific ions. This solution is brought in contact with the ion-exchange resins, which traps the unbonded remaining ions from the solution. Thus, specific ions are avoided on the resins. Crown ether is bonded to any resin or substrate, in this application.

Crown ether is bonded covalently to the extended porous polysaccharide polymer support to be used in chromatography. This support, though porous, is not a small resin bead. In addition, crown ether is not bound throughout the pore surface uniformly, since the support is post-modified to bind crown ether. This results in poor efficiency of ion-removal.

Crown ether has been covalently grafted to a porous carboxylate/phosphate based cation resin to provide a bifunctional resin. In this process, the resin is not neutral but has negative charge groups on the surface. Also known are crown ethers covalently bonded to a solid support, to be used as ion-exchangeable resin. This support is not porous and the amount of crown ether per unit mass of the support will be low, making the amount of resin required to remove a certain quantity of cations to be large. This is cost ineffective and poses problems in handling the ionic solution and disposal.

Ion exchange cryptants covalently bound to substrate are known from US Patent Application No. 2003/075508. The cryptants are covalently bonded using unsaturated double bond to a non-porous solid substrate by free radical polymerization. This is used for specific ion-trapping, although the trapping efficiency is poor due to small surface to mass ratio. A lithium trapping cryptant chemically bonded to high molecular weight matrix is known from BOID 59/30 dated 20.8.84. This also suffers the drawback of having poor trapping efficiency, due to small surface to mass ratio.

JP 56047406 discloses amino crown ethers chemically bonded to cross-linked polystyrene solid particle in order to immobilize the crown ether onto the surface of a non-porous solid polymer particle. This also has the same disadvantage of the previous patents.

US Patent Application No. 20040164025 relating to method and apparatus for separating ions of metallic elements in aqueous solution discloses hydrophobic organophosphate chelating extractant absorbed on to graphite or carbon film or felt. The extraction and stripping of various specific ions are carried out at different pH. Here, the extractant is physically adsorbed and likely to come off from the substrate and is not preferred. This is non-porous and has the disadvantage mentioned in the above patents.

US patent applications 20040262228 and 20050065282 directed to post-modification of a porous support, deal with polysaccharide porous support that is post-modified to covalently bond vinyl ether for chromatography. This product does not contain any specific ion trapper. Covalent bonding was carried out after the porous support was prepared. Hence, the used surface area of the pores in the support will be less than that present in the support. This reduces the efficiency. Big porous support impedes the flow of the solution containing the ions to be trapped. This increases the time taken for trapping all the ions present in the solution as compared to the same porous support of a smaller dimension.

US Patent Application No. 5865994 discloses bifunctional crown ether based cation exchange stationary phase, where macroporous resin having surface area 450²m/g with covalently grafted crown ether (in two steps) and carboxylate group is described. This resin is negatively charged with carboxylic groups. The negative charge would impede the flow of cation through the resin pores and decrease the efficiency and sensitivity of the resin.

N.M. Hassan et al., "SuperLig Ion Exchange Resin Swelling and Buoyancy Study' (DOE Contract No. DE-AC09-96SR18500) describes a solid spherical bent shaped methacrylate-based polymer resin with chemically crown ether.

In another area of research, crown ether has been covalently bonded to a hydrogel where specific ions are trapped. However, hydrogels are fragile, difficult to handle and always need to be kept. in aqueous medium.

Superlig@644 is a product available in the market where crown ether is attached to the resin matrix. In six cycles of loading, 20% loss of crown ether activity was reported, which is a disadvantage.

Therefore, the need was felt to provide a resin for efficient removal of ions from solution or air and repeatedly usable for many cycles of loading without any loss of crown ether activity.

### OBJECTS OF THE INVENTION:

It is therefore an object of this invention to propose a process for the preparation of a non-ionic, porous solid resin with chemically bonded crown ether which has a high surface area.

It-is a further object of this invention to propose a process for the preparation of a non-ionic, porous solid resin which can be reused by repeated regenerations.

Another object of this invention to propose a process for the preparation of a non-ionic, porous solid resin which has higher loadings of crown ether per unit mass.

Yet another object of this invention to propose a process for the preparation of a nonionic, porous solid resin where the crown ether is permanently fixed to the resin matrix.

### SUMMARY OF THE INVENTION:

This invention relates to a process for the preparation of a non-ionic porous, small solid resin with chemically bonded crown ether. The specific crown ethers are bound to the backbone of a polymer solid resin of sub-millimeter size that is porous for the permeation of the specific ion of interest from the surrounding liquid or air medium.

The crown ether containing porogen solution is added to the precursor solution to form porous, small, 3D polymer network solid material. The crown ether molecule contains acryl chemical group having a double bond character to enable it to co-polymerize with the polymer network in the pore surface and the crown ether is co-polymerized and covalently bonded to the neutral, porous, solid resin matrix.

### DETAILED DESCRIPTION OF THE INVENTION:

The invention provides a process for the preparation of a non-ionic, porous solid spherical bead shaped resin with covalently bonded crown ether, by suspension polymerization, said process comprising the steps of dissolving suspension stabilizers and salt in water and heating the solution to obtain an aqueous phase, dissolving crown ether in a first porogenic solvent to obtain a crown ether solution and dissolving a polymerization initiator in monomers and/or cross-linking agent, to obtain a second solution, adding said solution followed by adding a second porogen solvent to the crown ether solution, to obtain a resultant homogenous mixture, followed by stirring to obtain final organic phase, adding the organic phase to the aqueous phase under stirring to obtain a reaction mixture in the form of a stable suspension, heating and stirring the reaction mixture to obtain polymer beads, curing the polymer beads, followed by a step of purification to obtain the non-ionic porous solid resin with covalently bonded crown ether.

In one embodiment, the invention provides a process as defined above wherein the suspension stabilizers are selected from hydroxyethyl cellulose (HEC), polyvinyl alcohol, carboxy-methyl cellulose, gelatin in a concentration of from 0.2% to 2%, preferably from 0.4% to 1%, in combination with a further suspension stabilizer selected from sodium lignosulfonate, sodium polystyrene sulfonate, bentonite, sodium borate, sodium naphthalene sulfonate, sodium lauryl sulfonate, poly-dimethyl diallyl ammonium chloride, di-octyl sulfosuccinate, dodecylbenzene sulfonate-sodium salt in a concentration of from 0.1% to 1% and preferably in between 0.1-0.5%.

In one embodiment, the invention provides a process as defined above wherein the technique of copolymerization of two or more immiscible monomers involves selection and usage of proper inert porogen solvent in which all monomers are miscible.

In accordance with this invention, the resin is prepared by suspension polymerization, technique in which crown ether is co-polymerized and covalently bonded to the neutral, porous, solid resin matrix. The process comprises preparing an aqueous phase by dissolving suspension stabilizers and salt in water and heating the solution up to 80°C.

Thereafter, the crown ether is dissolved in a first porogen solvent at 45 to 50°C under stirring, till a clear solution of crown ether is formed. A polymerization initiator is dissolved in a solution of monomer and/or cross-linking agent under stirring at ambient temperature to obtain a mixture and the mixture is then added to the crown ether solution, followed by adding a second porogen solvent thereto, followed by the stirring the resultant mixture at ambient temperature for at least 30 minutes, to obtain the organic phase. The porogen solvents are added in monomers and distilled out after completion of polymerization reaction to induce the porosity in polymer matrix.

The organic phase is added to the aqueous phase under stirring to obtain a reaction mixture and speed of agitation is adjusted to get required particle size of beads. The reaction mixture is then heated to a temperature in the range of 60 to 90°C and preferably 75 to 85°C, for a period of time ranging from 8 to 25 hours and preferably 8 to 15 hours. Polymerization proceeds first by formation of soft beads and then hard beads. Once hard beads are obtained, the polymer is cured at 75 to 95°C for 5 to 15 hours. Polymer is then filtered out, washed with plenty of water to remove adhered chemicals, stabilizers etc, washed polymer beads are stirred in excess of water and slurry is heated. The porogen solvents in polymer beads are distilled out completely. The reaction mixture is then cooled to room temperature. Resin is filtered and washed with water, methanol (to remove traces of porogen solvents) and again with water. Excess water is filtered out under vacuum and resin is packed.

The suspension stabilizers are selected from hydroxyethyl cellulose (HEC), polyvinyl alcohol, carboxy-methyl cellulose, gelatin in a concentration of from 0.2% to 2%, preferably from 0.4% to 1%. These suspension stabilizers are used in combination with a second suspension stabilizer selected from sodium lignosulfonate, sodium polystyrene sulfonate, bentonite, sodium borate, sodium naphthalene sulfonate, sodium lauryl sulfonate, poly-dimethyl diallyl ammonium chloride, di-octyl sulfosuccinate, dodecylbenzene sulfonate-sodium salt. Concentration can vary from 0.1% to 1% and preferably in between 0.1-0.5%.

The salt used in the aqueous phase, such as NaCl and CaCl₂ are added to reduce solubility of monomers in water especially in presence of stabilizers and higher temperature. Alternatives can be Na₂So₄, NaNO₃, NaNO₂ etc and the concentration can vary from 5% to 40% at higher temperature.

The monomer is selected from ethyl styrene,styrene, acrylates such as methyl acrylate, ethyl acrylate, butyl acrylate, methyl methacrylate, and crosslinking agents is selected from divinylbenzene (DVB), ethylene glycol dimethacrylate (EGDMA). Crosslinking can vary between 2% and 100%. (EGDMA purity is 100%).

4-Acrylamidobenzo 18-crown-6 crown ether monomer (CE) quantity in the mixture can vary from 0.2 to 50%. This crown ether is specific to Sr, K and Pb. Selectively among these ions can be improved by changing benzo group in the above CE to dibenzo or cyclohexyl or dicyclohexyl. Different crown ethers have to be used for different ions, the only condition being that an acryl group functionalized crown ether has to be used in order to provide double bond for co-polymerization.

In one embodiment the crown ether is an acryl, acrylamide or any other polymerizable group/groups functionalized crown ether.

The first porogen solvent is selected from isobutanol and other alcohols such as isooctanol, amyl alcohol. Since this porogen is used for dissolution of 4-Acrylamidobenzo 18-crown-6, its % can vary as per the quantity of crown ether.

The second porogen solvent may be toluene or other aromatic solvents like benzene, xylene or aliphatic hydrocarbons like heptane, hexane.

In accordance with a preferred embodiment according to the invention, isobutanol and toluene are used as the first and second porogen. Isobutanol is also used for dissolution of 4-Acrylamidobenzo 18-crown-6. As the % of crown ether is varied in beading, the quantity of isobutanol and other porogen has to be adjusted accordingly. Isobutanol or any other alternative alcohol is necessary to bring crown ether in monomer mix as crown ether is insoluble in all other monomer such as DVB, styrene, EGDMA.

The polymerization initiator is selected from benzoyl peroxide, hydrogen peroxide, lauryl peroxide, azoisobutyronitrile, tertiary butyl peroxy benzoate, di-tertiary butyl peroxide, tertiarybutyl hydroperoxide % of initiator can vary from 0.1% to 5% and preferably 0.5% to 2% of total monomer weight.

Organic phase to aqueous phase ratio, can be varied between 1:1 and 1:10 and more preferably 1:5.

Polymerization temperature can be 60-90°C and preferably in between 75-85°C.

The polymerization time can be form 8 to 25 hrs and more preferably from 8 to 15 hrs. Polymer curing temperature and time can vary from 75 to 95°C and 5 to 15 hrs respectively.

Removal of porogen from copolymer beads is done by vacuum distillation/soxlet extraction with polar solvents such as ethanol, methanol, acetone, dioxane, ethers.

The beads are subjected to repeated washings with ethanol, methanol, acetone, followed by washing with demineralised water.

The invention also provides a non-ionic, porous, solid, spherical bead shaped resin having a particle device of 25 to 1400 µm produced by any of the above described processes.

The invention will now be explained in greater details with the help of the following non-limiting example.

### Example:

Typical quantity of chemicals used to obtain 65 gm of the non-ionic, porous, small, solid resin is provided.

### Organic phase

Divinyl benzene (DVB), 46.75 gm
Ethyl styrene, 27.5 gm
4-Acrylamidobenzo 18-crown-6, 750 mg
Isobutanol (IBA), 44 ml
Toluene, 81 ml
Benzoyl peroxide (BPO),1.87 gm

Toluene and IBA are used as porogen i.e. they are added in monomers and distilled out after completion of polymerization reaction to induce the porosity in polymer matrix. BPO is used as polymerization initiator.

### Aqueous phase

Demineralized water, 525 ml
Hydroxyethyl cellulose (HEC), 3.15 gm
Sodium lignosulfonate, 0.525 gm
Calcium chloride, 13 gm
Sodium chloride, 184 gm

### Process

Aqueous phase was prepared by dissolving HEC, sodium lignosulfonate, CaCl₂ and sodium chloride into water and solution was heated to 80°C (Step 1). 4-Acrylamidobenzo-18-Crown-6 was dissolved in IBA at 45-50°C under stirring, till a clear solution was formed (Step 2). BPO was dissolved in DVB and ethyl styrene under stirring at ambient temperature-and the mixture was then added to crown ether solution prepared in step 2. Toluene was then added to this solution and mixture was stirred at ambient temperature for at least 30 min. This forms an organic phase. Organic phase was added to aqueous phase (step 1) under stirring and speed of agitation was adjusted properly to get required particle size of beads. This reaction mixture was then heated to 78-80°C and maintained for 18 hrs under stirring. Soft beads and then hard beads were formed. This was followed by curing at 80 to 82°C for at least 8 hrs. The polymer was then filtered out, washed with water to remove adhered chemicals, stabilizers etc and the washed beads were stirred in excess of water to form a slurry. The slurry was heated and the porogen solvents were distilled out completely. The reaction mixture was cooled to room temperature. Resin was filtered and washed with water, methanol (to remove traces of porogen solvents and again with water. Excess water was filtered out under vacuum and resin is packed. The quantity of crown ether that has been bonded here is calculated to be ∼ 500 times more than that would have been bonded to the non porous resin surface of the same size. About 3g of crown ether in 65 g of resin can be covalently bonded in the present process. Hence, the pore surface areas in the resin would be ∼1200 m²/g.

Resin particle size can vary from 25 to 1400 micrometers.

The solution or air, containing the ions, is brought in contact with the non-ionic, porous, solid resin column. The solution surrounds the resins as it follows through the column and goes into the pores of the resin in short time due to less distance to be traveled and the absence of any charge on the solid that impedes the ions to flow with the solution. The pore surface has covalently bonded crown ethers that trap the ions of interest. The trapping of the ion having the diameter slightly smaller than the crown ring diameter is achieved by ionic charge-crown dipole interaction. Since the pore surface area is large, each particle traps large number of specific ions, increasing the trapping efficiency. Since, one ion can be trapped by one crown ether, the ions can be concentrated in this porous solid resin. The trapped ions along with the solid particles can be transported, stored, or treated to strip the ions.

The trapped ions repel one another in the resin and increase the osmotic pressure of the porous resin that results in swelling of the resin. This swelling can be detected and quantified by the change in volume or the height of the resin column by optical sensing that serves as the sensor for the trapped ion.

Crown ether is covalently bonded to the solid porous neutral 3D network in the pores. This resin was tested for extraction and stripping upto 10 cycles and found that the extraction efficiency varied with 2%. There is no loss of CE from the resin. The resin was reusable without any degradation. 74% of CE available in the resin trapped Sr⁺⁺ from 25 ml of 1000 ppm SrCl₂ aqueous solution when passed through a resin column of 2g. Sr⁺⁺, thus trapped, was stripped by 25 mL of 2N HNO₃. In order to test the necessity of covalently binding the crown ether to the 3D network, crown ether entrapped solid porous neutral 3D network was prepared by the same process using CE without acryl group. This entrapped resin did not extract any Sr⁺⁺ since the entrapped CE would have come out of the resin during the cleaning step itself. Thus, acryl group is needed door covalent bonding. Covalently bonded CE does not leach off from the resin. Resin usability and repeatability are very good with the resin prepared according to the invention.

In this process, crown ether that is functionalized with acryl group to possess a double bond is utilized in co-polymerization leading to covalent binding of the crown ether to the porous solid polymer 3D network. Leaching of crown ether, with and without the trapped ion, is forbidden.

The solid 3D network is made porous by the pore forming solution added to the precursors and crown ether was dissolved in this solution. Hence, crown ether is bonded to the pore surface that will be in contact with the ionic solution from which the ions are to be removed. Dipole of the crown makes the surface hydrophilic so that the ionic solution easily reaches into the pores of ∼ 10µm. Large pore surface area (by a factor of ∼2000 as compared to that of non porous solid resin of same size) supports more crown ether and hence increases the efficiency.

The porous solid matrix support is non-ionic. Hence, there will not be any electrostatic hindrance from the support matrix to the ions to be trapped. The ions are attracted by the crown dipole-ion charge.interaction. Ions from aqueous solution or air can be trapped. The physical changes that occur in the support on trapping the ions can be utilized to quantify the ions/chemicals of interest. The trapped ions are preserved inside the porous solid material for any length of time and transported form place to place. At the time of need, the trapped ions can be stripped off the material and used as preferred. Thus, this product finds utilities as scavenger of specific ions, concentrators of such ions, ion separators, ion transporters and ion/chemical sensors.

The resin is made to be ∼0.1 mm size so that, solution can surround the resin and reach the pore surface of the resin faster. This increases the efficiency and reduces the response time.

## Claims

1. A process for the preparation of a non-ionic, porous solid spherical bead shaped resin with covalently bonded crown ether, by suspension polymerization, said process comprising the steps of dissolving suspension stabilizers and salt in water and heating the solution to obtain an aqueous phase, dissolving crown ether in a first porogenic solvent to obtain a crown ether solution and dissolving a polymerization initiator in monomers and/or cross-linking agent, to obtain a second solution, adding said solution followed by adding a second porogen solvent to the crown ether solution, to obtain a resultant homogenous mixture, followed by stirring to obtain final organic phase, adding the organic phase to the aqueous phase under stirring to obtain a reaction mixture in the form of a stable suspension, heating and stirring the reaction mixture to obtain polymer beads, curing the polymer beads, followed by a step of purification to obtain the non-ionic porous solid resin with covalently bonded crown ether.

2. The process as claimed in claim 1, wherein said suspension stabilizers are selected from hydroxyethyl cellulose (HEC), polyvinyl alcohol, carboxy-methyl cellulose, gelatin in a concentration of from 0.2% to 2%, preferably from 0.4% to 1%, in combination with a further suspension stabilizer selected from sodium lignosulfonate, sodium polystyrene sulfonate, bentonite, sodium borate, sodium naphthalene sulfonate, sodium lauryl sulfonate, poly-dimethyl diallyl ammonium chloride, di-octyl sulfosuccinate, dodecylbenzene sulfonate-sodium salt in a concentration of from 0.1% to 1% and preferably in between 0.1-0.5%.

3. The process as claimed in claim 1, wherein:
- said salt is selected from sodium chloride (NaCl), sodium sulphate (Na₂SO₄), sodium nitrate (NaNO₃) and sodium nitrite (NaNO₂) in a proportion of 5% to 40%; or
- the monomer is selected from styrene, ethyl styrene, acrylates such as methyl acrylate, ethyl acrylate, butyl acrylate, methyl methacrylate and/or crosslinking agents such as divinylbenzene (DVB), ethylene glycol dimethacrylate (EGDMA); or
- said first porogen solvent is selected from isobutanol, isooctanol, amyl alcohol; or
- said second porogen solvent is selected from toluene or other aromatic solvents, such as benzene and xylene, or aliphatic hydrocarbons, such as heptane and hexane.

4. The process as claimed in claim 1, wherein:
- said technique of copolymerization of two or more immiscible monomers involves selection and usage of proper inert porogen solvent in which all monomers are miscible; or
- said polymerization initiator is selected from benzoyl peroxide, hydrogen peroxide, lauryl peroxide, azoisobutyronitrile, tertiary butyl peroxy benzoate, di-tertiary butyl peroxide, tertiarybutyl hydroperoxide, ammonium persulphate, potassium persulphate.

5. The process as claimed in claim 1, wherein:
- said polymerization initiator is used in a proportion of 0.1% to 5% and preferably 0.5% to 2% of the total weight of monomer; or
- said aqueous solution is formed by dissolving the suspension stabilizers and salt in water and heating up to 80°C; or
- the crown ether is an acryl, acrylamido or any other polymerizable group/groups functionalized crown ether.

6. The process as claimed in claim 1, wherein the crown ether solution is formed by heating at 45 to 50°C with stirring.

7. The process as claimed in claim 1, wherein
- the polymerization initiator is dissolved in the monomer and/or cross linking agent solution at ambient temperature with stirring; or
- the resultant mixture is stirred at ambient temperature.

8. The process as claimed in claim 1, wherein the resultant mixture is stirred for at least 30 minutes.

9. The process as claimed in claim 1, wherein the reaction mixture comprising the aqueous phase and organic phase is heated to a temperature in the range of 60 to 90°C, preferably 75 to 85°C.

10. The process as claimed in claim 1, wherein the polymer beads are cured at 75 to 95°C.

11. The process as claimed in claim 1, wherein the polymer beads are cured over a period of 5 to 15 hours.

12. The process as claimed in claim 1, wherein steps of purification of the polymer beads comprises filtering out the polymer beads washing with water and stirring the beads in excess water to form a slurry, heating the slurry to distil the porogens followed by cooling the slurry, filtering the polymer beads and washing with an organic solvent followed by water and drying.

13. The process as claimed in claim 12, wherein:
- the porogen solvent is removed by vacuum distillation/extraction, wherein the extraction is preferably done using polar solvents selected from ethanol, methanol, acetone, dioxane, ethers; or
- the organic solvent used for washing is selected from methanol, ethanol, acetone.

14. A non-ionic porous, solid, spherical bead shaped resin more suitable for repeated usage cycles by virtue of covalently bonded crown ether, having a particle size of 25 to 1400 um, produced by the process as claimed in any one of the preceding claims.

## Patentansprüche

1. Verfahren zur Herstellung eines nicht-ionischen, porösen, festen, zu kugelförmigen Perlen geformten Harzes mit kovalent gebundenem Kronenether durch Suspensionspolymerisation, wobei das Verfahren die Schritte Lösen von Suspensionsstabilisatoren und Salz in Wasser und Erwärmen der Lösung unter Erhalt einer wässrigen Phase, Lösen von Kronenether in einem ersten porogenen Lösungsmittel unter Erhalt einer Kronenetherlösung und Lösen eines Polymerisationsinitiators in Monomeren und/oder Vernetzungsmittel unter Erhalt einer zweiten Lösung, Zusetzen der Lösung gefolgt von einem Zusetzen eines zweiten porogenen Lösungsmittels zu der Kronenetherlösung, um ein resultierendes homogenes Gemisch zu erhalten, gefolgt von einem Rühren unter Erhalt einer finalen organischen Phase, Zusetzen der organischen Phase zu der wässrigen Phase unter Rühren, um ein Reaktionsgemisch in der Form einer stabilen Suspension zu erhalten, Erwärmen und Rühren des Reaktionsgemisches unter Erhalt von Polymerperlen, Härten der Polymerperlen, gefolgt von einem Reinigungsschritt unter Erhalt des nicht-ionischen, porösen, festen Harzes mit kovalent gebundenem Kronenether umfasst.

2. Verfahren, wie es in Anspruch 1 beansprucht ist, wobei die Suspensionsstabilisatoren ausgewählt sind aus Hydroxyethylcellulose (HEC), Polyvinylalkohol, Carboxymethylcellulose, Gelatine in einer Konzentration von 0,2% bis 2%, vorzugsweise von 0,4% bis 1%, in Kombination mit einem weiteren Suspensionsstabilisator, ausgewählt aus Natriumlignosulfonat, Natriumpolystyrolsulfonat, Bentonit, Natriumborat, Natriumnaphthalensulfonat, Natriumlaurylsulfonat, Polydimethyldiallylammoniumchlorid, Dioctylsulfosuccinat, Dodecylbenzolsulfonat-Natriumsalz in einer Konzentration von 0,1% bis 1% und vorzugsweise zwischen 0,1 und 0,5%.

3. Verfahren, wie es in Anspruch 1 beansprucht ist, wobei:
- das Salz aus Natriumchlorid (NaCl), Natriumsulfat (Na₂SO₄), Natriumnitrat (NaNO₃) und Natriumnitrit (NaNO₂) in einem Verhältnisanteil von 5% bis 40% ausgewählt ist oder
- das Monomer aus Styrol, Ethylstyrol, Acrylaten, z.B. Methylacrylat, Ethylacrylat, Butylacrylat, Ethylmethacrylat, und/oder Vernetzungsmitteln, zum Beispiel Divinylbenzol (DVB), Ethylenglykoldimethacrylat (EGDMA), ausgewählt ist oder
- das erste porogene Lösungsmittel aus Isobutanol, Isooctanol, Amylalkohol ausgewählt ist oder
- das zweite porogene Lösungsmittel aus Toluol oder anderen aromatischen Lösungsmitteln, zum Beispiel Benzol und Xylol, oder aliphatischen Kohlenwasserstoffen, zum Beispiel Heptan und Hexan, ausgewählt ist.

4. Verfahren, wie es in Anspruch 1 beansprucht ist, wobei:
- die Technik der Copolymerisation von zwei oder mehr nicht mischbaren Monomeren Auswahl und Verwendung von geeignetem inertem porogenem Lösungsmittel, in dem alle Monomere mischbar sind, involviert oder
- der Polymerisationsinitiator aus Benzoylperoxid, Wasserstoffperoxid, Laurylperoxid, Azoisobutyronitril, tert.-Butylperoxybenzoat, Di-tert.-Butylperoxid, tert.-Butylhydroperoxid, Ammoniumpersulfat, Kaliumpersulfat ausgewählt ist.

5. Verfahren, wie es in Anspruch 1 beansprucht ist, wobei:
- der Polymerisationsinitiator in einem Verhältnisanteil von 0,1% bis 5% und vorzugsweise 0,5% bis 2% des Gesamtgewichts an Monomer verwendet wird oder
- die wässrige Lösung durch Lösen der Suspensionsstabilisatoren und Salz in Wasser und Erwärmen auf 80°C gebildet wird oder
- der Kronenether ein Acryl-, Acrylamid- oder mit einer anderen polymerisierbaren Gruppe/anderen polymerisierbaren Gruppen funktionalisierter Kronenether ist.

6. Verfahren, wie es in Anspruch 1 beansprucht ist, wobei die Kronenetherlösung durch Erwärmen bei 45 bis 50°C unter Rühren gebildet wird.

7. Verfahren, wie es in Anspruch 1 beansprucht ist, wobei
- der Polymerisationsinitiator in der Monomer- und/oder -Vernetzungsmittel-Lösung bei Umgebungstemperatur unter Rühren gelöst wird oder
- das resultierende Gemisch bei Umgebungstemperatur gerührt wird.

8. Verfahren, wie es in Anspruch 1 beansprucht ist, wobei das resultierende Gemisch für wenigstens 30 Minuten gerührt wird.

9. Verfahren, wie es in Anspruch 1 beansprucht ist, wobei das Reaktionsgemisch, das die wässrige Phase und die organische Phase umfasst, auf eine Temperatur im Bereich von 60 bis 90°C, vorzugsweise 75 bis 85°C, erwärmt wird.

10. Verfahren, wie es in Anspruch 1 beansprucht ist, wobei die Polymerperlen bei 75 bis 95°C gehärtet werden.

11. Verfahren, wie es in Anspruch 1 beansprucht ist, wobei die Polymerperlen über einen Zeitraum von 5 bis 15 Stunden gehärtet werden.

12. Verfahren, wie es in Anspruch 1 beansprucht ist, wobei der Reinigungsschritt der Polymerperlen Abfiltrieren der Polymerperlen, Waschen mit Wasser und Rühren der Perlen in einem Wasserüberschuss unter Bildung einer Aufschlämmung, Erwärmen der Aufschlämmung, um die Porogene abzudestillieren, gefolgt vom Kühlen der Aufschlämmung, Filtrieren der Polymerperlen und Waschen mit einem organischen Lösungsmittel, gefolgt von Wasser und Trocknung umfasst.

13. Verfahren, wie es in Anspruch 12 beansprucht ist, wobei:
- das porogene Lösungsmittel durch Vakuumdestillation/Extraktion entfernt wird, wobei die Extraktion vorzugsweise unter Verwendung von polaren Lösungsmitteln, ausgewählt aus Ethanol, Methanol, Aceton, Dioxan, Ethern, durchgeführt wird, oder
- das organische Lösungsmittel, das zum Waschen verwendet wird, aus Methanol, Ethanol, Aceton ausgewählt ist.

14. Nicht-ionisches, poröses, festes, zu kugelförmigen Perlen geformtes Harz, das für wiederholte Verwendungszyklen durch kovalent gebundenen Kronenether geeigneter ist, das eine Partikelgröße von 25 bis 1400 µm hat, das durch das Verfahren, wie es in einem der vorangehenden Ansprüche beansprucht ist, hergestellt wurde.

## Revendications

1. Procédé de préparation, par polymérisation en suspension, d'une résine non-ionique, poreuse et solide, en perles sphériques, à éther-couronne lié par liaison covalente, lequel procédé comporte les étapes suivantes :
- dissoudre des agents de stabilisation de suspension et un sel dans de l'eau et chauffer cette solution, pour en faire une phase aqueuse ;
- dissoudre un éther-couronne dans un premier solvant porogène, pour en faire une solution d'éther-couronne ;
- dissoudre un amorceur de polymérisation dans des monomères et/ou un agent de réticulation, pour en faire une deuxième solution ;
- ajouter cette dernière solution, puis un deuxième solvant porogène à la solution d'éther-couronne, pour obtenir un mélange résultant homogène, et agiter ensuite celui-ci pour en faire une phase organique finale ;
- ajouter cette phase organique à la phase aqueuse, tout en agitant le tout, pour en faire un mélange réactionnel qui se présente sous la forme d'une suspension stable ;
- chauffer ce mélange réactionnel, tout en l'agitant, pour obtenir des perles de polymère ;
- faire durcir ces perles de polymère ;
- et opérer ensuite une purification, de manière à obtenir ladite résine non-ionique, poreuse et solide, à éther-couronne lié par liaison covalente.

2. Procédé conforme à la revendication 1, dans lequel lesdits agents de stabilisation de suspension sont choisis parmi les suivants : hydroxyéthyl-cellulose (HEC), poly(alcool vinylique), carboxyméthyl-cellulose ou gélatine, en une concentration de 0,2 à 2 % et de préférence de 0,4 à 1 %, en combinaison avec un autre agent de stabilisation de suspension choisi parmi les suivants : lignosulfonate de sodium, polystyrène-sulfonate de sodium, bentonite, borate de sodium, naphtalène-sulfonate de sodium, lauryl-sulfonate de sodium, poly(chlorure de diméthyl-diallyl-ammonium), sulfosuccinate de dioctyle ou dodécyl-benzène-sulfonate de sodium, en une concentration de 0,1 à 1 % et de préférence de 0,1 à 0,5 %.

3. Procédé conforme à la revendication 1, dans lequel :
- ledit sel est choisi parmi du chlorure de sodium (NaCl), du sulfate de sodium (Na₂SO₄), du nitrate de sodium (NaNO₃) et du nitrite de sodium (NaNO₂), en une proportion de 5 à 40 % ;
- ou le monomère est choisi parmi le styrène, un éthyl-styrène, les acrylates comme l'acrylate de méthyle, l'acrylate d'éthyle, l'acrylate de butyle ou le méthacrylate de méthyle, et/ou des agents de réticulation comme le divinyl-benzène (DVB) ou le diméthacrylate d'éthylène-glycol (DMAEG) ;
- ou ledit premier solvant porogène est choisi parmi l'iso-butanol, l'iso-octanol et l'alcool amylique ;
- ou ledit deuxième solvant porogène est choisi parmi le toluène et les autres solvants aromatiques, comme le benzène et les xylènes, et les hydrocarbures aliphatiques, comme l'heptane et l'hexane.

4. Procédé conforme à la revendication 1, dans lequel :
- ladite technique de copolymérisation de deux monomères non-miscibles ou plus implique de choisir et d'utiliser un solvant porogène inerte approprié auquel tous les monomères soient miscibles ;
- ou ledit amorceur de polymérisation est choisi parmi les suivants : peroxyde de benzoyle, peroxyde d'hydrogène, peroxyde de lauryle, azo-bis(isobutyronitrile), perbenzoate de tertiobutyle, peroxyde de di-tertiobutyle, hydroperoxyde de tertiobutyle, persulfate d'ammonium, et persulfate de potassium.

5. Procédé conforme à la revendication 1, dans lequel :
- ledit amorceur de polymérisation est utilisé en une quantité représentant de 0,1 à 5 %, et de préférence de 0,5 à 2 %, du poids total de monomères ;
- ou l'on prépare ladite solution aqueuse en dissolvant dans de l'eau les agents de stabilisation de suspension et le sel et en chauffant le tout à 80 °C;
- ou l'éther-couronne est un éther-couronne doté d'un ou de groupe(s) fonctionnel(s), qui sont des groupes polymérisables de type acrylique, acrylamido, ou de n'importe quel autre type.

6. Procédé conforme à la revendication 1, dans lequel on prépare la solution d'éther-couronne en chauffant à une température de 45 à 50 °C et en agitant.

7. Procédé conforme à la revendication 1, dans lequel :
- on dissout l'amorceur de polymérisation pour en faire une solution dans le monomère et/ou l'agent de réticulation, à température ambiante et en agitant le tout ;
- ou l'on agite le mélange résultant à la température ambiante.

8. Procédé conforme à la revendication 1, dans lequel on agite le mélange résultant durant au moins 30 minutes.

9. Procédé conforme à la revendication 1, dans lequel le mélange réactionnel comprenant la phase aqueuse et la phase organique est chauffé à une température située dans l'intervalle allant de 60 à 90 °C, et de préférence, dans celui allant de 75 à 85 °C.

10. Procédé conforme à la revendication 1, dans lequel on fait durcir les perles de polymère à une température de 75 à 95 °C.

11. Procédé conforme à la revendication 1, dans lequel on fait durcir les perles de polymère durant un laps de temps de 5 à 15 heures.

12. Procédé conforme à la revendication 1, dans lequel l'étape de purification des perles de polymère comporte les opérations suivantes : récupérer les perles de polymère par filtration et les laver à l'eau, brasser ces perles dans de l'eau en excès pour en faire une suspension, chauffer cette suspension pour en éliminer par distillation les solvants porogènes, puis faire refroidir la suspension, récupérer par filtration les perles de polymère, laver ces perles avec un solvant organique, puis avec de l'eau, et les faire sécher.

13. Procédé conforme à la revendication 12, dans lequel :
- les solvants porogènes sont chassés par distillation/extraction sous vide, l'extraction étant de préférence réalisée à l'aide d'un solvant polaire choisi parmi l'éthanol, le méthanol, l'acétone, le dioxane et les éthers ;
- ou le solvant organique employé pour le lavage est choisi parmi l'éthanol, le méthanol et l'acétone.

14. Résine non-ionique, poreuse et solide, en perles sphériques, plus appropriée, en raison de la présence d'un éther-couronne lié par liaison covalente, pour un usage en cycles répétés, et constituée de particules de 25 à 1400 µm de taille, laquelle résine est produite par un procédé conforme à l'une des revendications précédentes.
